# EUROPÄISCHE PATENTSCHRIFT

(11) **EP 1 358 923 B1**
(45) Veröffentlichungstag und Bekanntmachung des Hinweises auf die Patenterteilung: **06.02.2008**
(21) Anmeldenummer: 03009989.9
(22) Anmeldetag: 02.05.2003
(51) Int. Cl.: B01D 53/04, B01D 46/00, B01D 46/24, F01N 3/023, F01N 3/028

(54) **Partikel- oder Hybridfilter, insbesondere zur Behandlung der einem Fahrzeuginnenraum zuführbaren Luft**
Particle or hybrid filter, in particular for the treatment of air to be introduced in a vehicle passenger compartment
Filtre de particules ou hybride, notamment pour le traitement de l'air à introduire dans l'habitacle d'un véhicule automobile

(30) Priorität: 03.05.2002 DE 10219869
(43) Veröffentlichungstag der Anmeldung: 05.11.2003
(73) Patentinhaber: Behr GmbH & Co. KG, 70469 Stuttgart (DE)
(72) Erfinder: Angermann, Hans-Heinrich, Dr.rer.nat., 70197 Stuttgart (DE); Burk, Roland, Dipl.-Phys., 70469 Stuttgart (DE)
(74) Vertreter: Grauel, Andreas

(56) Entgegenhaltungen:
- WO-A-00/21646
- FR-A- 2 780 096
- FR-A- 2 809 766
- ALLANSON R. ET AL: 'optimising the low temperature performance and regeneration efficiency of the continuously regenerating diesel particulate filter system' SOCIETY OF AUTOMOTIVE ENGINEERS PUBLICATIONS Nr. SAE2002-01-0428, M{rz 2002, Seiten 53 - 60, XP008069377

## Beschreibung

Die Erfindung betrifft ein Partikel- oder Hybridfilter, zur Behandlung der einem Fahrzeuginnenraum zuführbaren Luft für einen Innenraum eines Kraftfahrzeugs gemäß dem Oberbegriff des Anspruchs 1, eine Luftzufüheinrichtung gemäß Anspruch 9 sowie ein Kraftfahrzeug gemäß Anspruch 19.

Um die Insassen eines Kraftfahrzeugs vor Schadstoffen in Form von Partikeln, wie bspw. Dieselruß, welcher auf seiner Oberfläche überwiegend polyzyklische aromatische Kohlenwasserstoffe transportiert und als krebserregend gilt, Abrieb von Bremsbelägen und Reifen, oder vor Pollen, Bakterien, Pilzsporen, zu schützen, sind Faser-Partikelfilter bekannt, welche die Partikel aus der dem Fahrzeuginnenraum zuzuführenden Luft filtern. Die Filterwirkung beruht dabei auf einer Einfangwirkung durch Sieb-, Trägkeits- und Diffusionseffekte, sowie einem Hafteffekt der Partikel an den Fasern. Hierbei kann der Einfang- und Hafteffekt durch eine Elektretwirkung verstärkt werden, indem die Fasern beim Herstellungsprozess polarisiert werden, so dass lokale elektrostatische Felder entstehen, welche die Teilchen zusätzlich anziehen. Häufig werden auch sogenannte Hybridfilter eingesetzt, die zusätzlich auch der Filterung gasförmiger Schadstoffe mittels Aktivkohle dienen.

Nachteilig bei Partikel- und Hybridfiltern ist, dass sie sich im Laufe der Zeit zusetzen. So bildet sich luftanströmseitig an der Filteroberfläche ein Filterkuchen, wodurch der Druckabfall mehr oder weniger schlagartig stark zunimmt (filter clogging), so dass der Filter gewechselt werden muss. Ferner ist die Effizienz von Partikel- und Hybridfiltern in Hinblich auf Feinstaub wie bspw. Dieselruß mit einem Partikeldurchmesser von 0,1 bis 1 Mikrometer eher als gering anzusehen. So haben sie nur eine Effizienz von 20 bis 30%. Ferner verlieren die Elektretfasern auf Grund der Abschirmung ihres elektrischen Feldes durch angelagerte Partikel schnell ihre Wirkung.

Um insbesondere Benzol oder andere molekulare Schadstoffe aus der Luft zu filtern, sind sogenannte Sorptionsfilter bekannt. Aus diesem Bereich sind ferner desorbierbare Sorptionsfilter bekannt, bei denen das Sorptionsfilter durch eine Erhitzung des Sorptionsfilters zumindest partiell gereinigt werden kann, so dass ein Wechsel des Sorptionsfilters vermieden oder zumindest hinausgezögert werden kann.

So ist aus der DE 198 05 011 A1 ein desorbierbares Sorptionsfilter bekannt, das eine Trägerstruktur aus einem elektrisch leitfähigen Material sowie Sorptionsmittel, die an der Trägerstruktur haften, umfasst. Die Trägerstruktur besteht aus einem Streckmetallgitter, das ein Netz von in einem Winkel zu einer Flächennormalen stehenden Gitterstegen umfasst. Hierbei ist eine Erwärmung der Trägerstruktur durch das Anlegen einer elektrischen Spannung zum Zwecke der Desorption möglich. Die Trägerstruktur ist mit einem Sorptionsmittel beschichtet, das eine hohe Kinetik besitzt so dass eine hohe Filtereffizienz bei gleichzeitig geringem spezifischen Druckabfall erreicht werden kann.

Ferner ist aus der DE 100 01 043 A1 ein desorbierbares Sorptionsfilter bekannt, mit einem metallischen Träger, der durch Stromfluss aufheizbar ist und mit einem an oder auf dem Träger aufgebrachten Adsorber. Als Adsorber wird ein Adsorberfaserverbund vorgeschlagen, insbesondere aus Aktivkohlegewebe, -gestrick, -filz oder -vlies. Hierbei ist der Adsorber flächig ausgebildet und mit dem Träger über an dem Träger angeordnete Halteelemente mechanisch verbunden.

Die DE 199 14 614 A1 beschreibt eine Vorrichtung und ein Verfahren zur Reinigung eines dem Fahrzeuginnenraum zugeführten Luftstroms. Hierbei sind zwischen dem Lufteinlass und dem Luftauslass im Luftführungsgehäuse zwei parallele Luftströmungswege vorgesehen, wobei in mindestens einem der Strömungswege ein Adsorber angeordnet ist. Ferner sind Luftstromsteuerelemente vorgesehen, welche in Desorptionsstellung eine entgegen der Adsorptionsströmung gerichtete Durchströmung des Adsorbers zu einer Abluftöffnung freigeben.
Es ist Aufgabe der Erfindung, ein Partikel- oder Hybridfilter zur Behandlung der einem Fahrzeuginnenraum zuführbaren Luft in Hinblick auf einen oxidierbaren Feinstaubanteil mit Partikeldurchmessern von kleiner als 1 Mikrometer, zu verbessern.
Diese Aufgabe wird gelöst durch ein Verfahren gemäß Anspruch 1, eine Luftzuführeinrichtung gemäß Anspruch 9 sowie durch ein Kraftfahrzeug gemäß Anspruch 19.
Erfindungsgemäß wird ein Partikel- oder Hybridfilter einer Luftzuführeinrichtung für einen Innenraum eines Kraftfahrzeugs vorgesehen, der zeitweilig auf Temperaturen von über 100°C und unterhalb der Zündtemperatur von organischem Material aufgeheizt wird und dabei einer oxidierenden Atmosphäre ausgesetzt ist. Dabei kann als oxidierende Atmosphäre Luft, d.h. der Luftsauerstoff, dienen. Durch eine Erhitzung des Filters auf die entsprechenden Temperaturen, welche in regelmäßigen oder unregelmäßigen Zeitabständen, bspw. in Abhängigkeit des Druckabfalls infolge des Zusetzens des Filters, erfolgen kann, erfolgt eine Selbstreinigung des Filters. So findet bereits unterhalb der Zündtemperatur von organischem Material, z.B. im Temperaturbereich zwischen 150 und 350°C ein Masseverlust durch Oxidation statt. Dadurch können Partikelkonglomerate, die zwar massearm sind, aber eine große Oberfläche aufweisen, innerhalb der Faserstruktur des Filters nach und nach wieder abgebaut und dadurch der Druckverlust des Filters auf geringere Werte zurück geführt werden. Derartige Filter können insbesondere in Hinblick auf Dieselruß eine Effizienz von 70 - 80% erreichen, d.h. sie sind viel effektiver als herkömmliche Partikel- oder Hybridfilter. Dies wird dadurch bewirkt, dass die sich nach kurzer Zeit aufbauenden Ruß-Konglomerate selbst eine Filterwirkung entwickeln, indem sich diese als sehr feines Netzwerk zwischen den Filterfasern ausbreiten. Durch eine entsprechend gewählte Oxidationsrate kann diese Struktur so eingestellt werden, dass sich entweder ein niedriger Druckverlust oder eine hohe Effizienz für Dieselruß oder ein gewünschter Kompromiss zwischen beiden Größen einstellt.

Vorzugsweise ist dem Filter ein Partikel- oder Hybridfilter vorgeschaltet. Dieser Vorfilter dient insbesondere dazu, den Hauptanteil der größeren Partikel und/oder molekulare Schadstoffe, wie höher siedende Kohlenwasserstoffe und saure Gase (NOₓ, SO₂) im Falle eines Hybridfilters, auszufiltern. Dabei bleiben im Vorfilter auch einige Feinpartikel hängen. Hierbei handelt es sich vorzugsweise um einen konventionellen Filter.

Das Filtermaterial des Hauptfilters kann - je nach Anforderung für die Temperaturbeständigkeit - aus Kunststoff-, Metall-, Cellulose-, Glas-, Keramik-, nicht-aktivierten oder aktivierten Kohlefasern, sonstigen Fasern aus nachwachsenden Rohstoffen oder aus einem Verbund dieser Materialien bestehen. Dabei kann das Fasermaterial zumindest teilweise mit katalytisch wirkenden Materialien beschichtet sein, um zumindest an den Berührungspunkten die Oxidationsrate zu erhöhen.

Vorzugsweise weist der Filter eine Heizvorrichtung auf, wobei die Heizvorrichtung direkt durch das Filtermaterial gebildet werden kann, insbesondere wenn durch das zumindest teilweise elektrisch leitfähige Filtermaterial Strom geleitet wird, welche zu einer direkten Erwärmung des Filtermaterials führt. Alternativ kann eine Erwärmung mit Hilfe von Mikrowellen erfolgen. Ferner ist eine induktive Erwärmung oder eine Erwärmung mittels durchgeleiteter Heißluft möglich, oder die Erwärmung kann mittels indirekter Erwärmung erfolgen, d.h. das Filtermaterial ist auf einem elektrisch heizbaren Trägermaterial aufgebracht oder Heizdrähte sind im Filtermaterial vorgesehen, die durch Wärmeleitung, Konvektion und/oder Infrarot-Strahlung Wärme an das Filtermaterial abgeben.

Gemäß einer weiteren Ausführungsform ist auch der Vorfilter heizbar. Dabei kann eine einzige Heizvorrichtung für den Vorfilter und den Filter vorgesehen sein. Alternativ können für den Vorfilter und den Filter getrennte Heizvorrichtungen vorgesehen sein, was den Vorteil einer optimalen Temperierung des jeweiligen Filters möglich macht.

Vorzugsweise ist eine Vorrichtung zur Anreicherung der Luft während des Reinigungsvorganges mit atomarem Sauerstoff und/oder Ozon, bspw. eine UV-Lampe, welche vor Ort, d.h. im Filter, Ozon erzeugt, und/oder eine Vorrichtung zum Einsprühen von anderen gasförmigen oder flüssigen Stoffen vorgesehen. Derartige Vorrichtungen beschleunigen die Oxidation und somit die Reinigung des Filters, also insbesondere von partikulärem Kohlenstoff, feinen Rußpartikeln, die vorwiegend für einen Druckverlustanstieg verantwortlich sind.

In einer anderen Ausführungsform kann die für eine Oxidation der organischen Partikel benötigte Aktivierungsenergie zusätzlich oder ausschließlich auch durch energiereiche Strahlung, z.B. UV-Strahlung aufgebracht werden. Hierzu wird der Filter zumindest temporär während der Regenerationsphase bestrahlt.

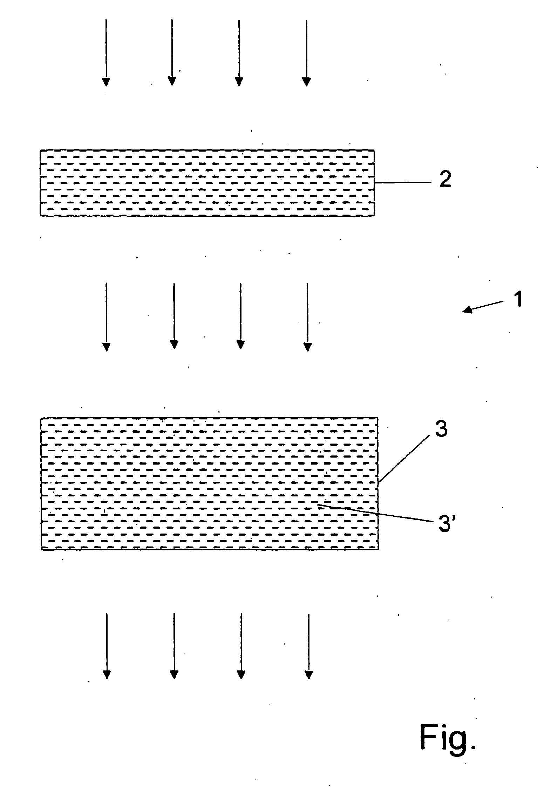

Im folgenden wird die Erfindung anhand eines Ausführungsbeispiels unter Bezugnahme auf die Zeichnung im einzelnen erläutert. Die einzige Figur der Zeichnung zeigt eine schematische Darstellung der Wirkungsweise eines erfindungsgemäßen Filters.

Ein Filtersystem 1, welches aus einem Vorfilter 2 und einem Hauptfilter 3 besteht, wird von einem durch Pfeile angedeuteten Luftstrom durchströmt, welcher dem Fahrzeuginnenraum zugeführt wird. Der Aufbau des Vorfilters 2 entspricht hierbei dem Aufbau eines herkömmlichen Partikelfilters, es kann jedoch auch ein Hybridfilter entsprechend verwendet werden, wobei ein Hybridfilter den Vorteil einer gewissen zusätzlichen Filterung gasförmiger Schadstoffe bietet. Dieses Vorfilter 2 filtert die großen, massereichen Grobpartikel, wie z.B. Possen, Staub, relativ effizient und feine im Luftstrom enthaltene Dieselrußpartikel der Größenklasse 0,5 µm zu etwa 20 bis 30%. Im Anschluss wird der Luftstrom in das Hauptfilter 3 geleitet.

Das Hauptfilter 3 besteht im wesentlichen aus einem Fasermaterial 3', welches von einem Trägergerüst (nicht dargestellt) getragen wird. Gemäß dem Ausführungsbeispiel sind als Fasermaterial 3' Kunststofffasern vorgesehen, jedoch können auch Faserfilter aus Materialien verwendet werden, die eine ausreichende Temperaturbeständigkeit besitzen, um eine ausreichende Oxidationsrate feiner Rußpartikel unterhalb der Zündtemperatur zu erzielen.

Der Aufbau des Hauptfilters 3 kann dem Aufbau eines desorbierbaren Sorptionsfilters entsprechen, wie er in der DE 198 05 011 A1 oder der DE 100 01 043 A1 offenbart ist.

Das Hauptfilter 3, d.h. insbesondere das Fasermaterial 3', kann mittels einer nicht dargestellten Heizvorrichtung aufgeheizt werden, wobei im vorliegenden Ausführungsbeispiel die Wärmestrahlung verwendet wird, welche durch das elektrische Aufheizen eines das Fasermaterial 3' stützenden Gitters (nicht dargestellt) erzeugt wird. Hierbei wird das Fasermaterial 3' des Hauptfilters 3 für einige Minuten auf eine Temperatur von über 100°C, im vorliegenden Fall auf über 200°C, aufgeheizt. Dabei erfolgt eine Luftzufuhr, wobei die Luft mit atomarem Sauerstoff und/oder Ozon angereichert wird. Hierbei werden Partikelkonglomerate, insbesondere aus Dieselrußpartikeln, die sich auf dem Fasermaterial 3' abgelagert haben, oxidiert, so dass ein Masseverlust dieser Partikelkonglomerate eintritt und das Hauptfilter 3 gereinigt und damit auf einen geringeren Druckverlust zurückgeführt wird. Danach ist der Hauptfilter 3 wieder für einen gewissen Zeitraum einsatzbereit, wobei der Zeitraum vom Fasermaterial 3', vom Luftmassenstrom und der Partikelkonzentration in der Luft, die gefiltert wird, abhängt. Wenn die Luft während der Reinigung des Hauptfilters 3 nicht in den Fahrzeuginnenraum gelangen soll, so kann bspw. eine Filteranordnung mit wechselweise betreibbaren Filtern vorgesehen werden, wie sie bspw. in der DE 199 14 514 A1 beschrieben ist. Alternativ ist eine Bypass-Anordnung oder eine Anordnung möglich, wie sie in der DE 199 14 614 A1 offenbart wurde. Dabei wird im Reinigungsmodus der Filter von einem sehr geringen Luftstrom in Gegenstromrichtung durchströmt und die Oxidationsprodukte bspw. an die Umgebung abgeführt.

Gemäß dem vorliegenden Ausführungsbeispiel ist auch der Vorfilter 2 entsprechend mittels einer nicht dargestellten Heizvorrichtung heiz- und reinigbar, so dass auch die Standzeit des Vorfilters 2 erhöht werden kann.

Gemäß dem vorliegenden Ausführungsbeispiel erfolgt das Aufheizen zur Selbstreinigung der beiden Filter 2 und 3 gleichzeitig. Es ist jedoch auch ein Reinigungsbetrieb möglich, der für jeden Filter 2 bzw. 3 bedarfsabhängig erfolgt. Hierfür wird der Druckverlust ermittelt und mit einem Schwellwert verglichen bei dessen Überschreiten die Reinigung der Filter 2 und 3 erfolgt.

Um den Zusatzaufwand einer Druckverlustmessung zu vermeiden, kann auch die Druckverlustzunahme rechnerisch über die durchgesetzte Luftmenge abgeschätzt werden und der Reinigungsbetrieb rein zeitgesteuert gestartet werden.

## Patentansprüche

1. Verfahren zur Reinigung eines ein Fasermaterial umfassenden Partikel- oder Hybridfilters einer Luftzuführeinrichtung für einen Innenraum eines Kraftfahrzeugs, **dadurch gekennzeichnet, dass** an dem Fasermaterial haftende organische Partikel, insbesondere Rußpartikel, bei einer Temperatur über 100°C und unterhalb der Zündtemperatur der organischen Partikel oxidiert werden, wobei der Filter (3) zur Oxidation der organischen Partikel zumindest zeitweise einer oxidierenden Atmosphäre ausgesetzt ist.

2. Verfahren nach Anspruch 1, **dadurch gekennzeichnet, dass** der Partikel- oder Hybridfilter (3) zur Oxidation der organischen Partikel mittels einer Heizvorrichtung geheizt wird.

3. Verfahren nach einem der vorhergehenden Ansprüche, **dadurch gekennzeichnet, dass** ein dem Partikel- oder Hybridfilter (3) vorgeschalteter weiterer Partikel- oder Hybridfilter (2) zur Oxidation organischer Partikel geheizt wird.

4. Verfahren nach einem der vorhergehenden Ansprüche, **dadurch gekennzeichnet, dass** der Partikel- oder Hybridfilter (2, 3) zur Oxidation der organischen Partikel mittels Mikrowellen geheizt wird.

5. Verfahren nach einem der vorhergehenden Ansprüche, **dadurch gekennzeichnet, dass** der Filter (3) zur Oxidation der organischen Partikel zumindest zeitweise von mit atomarem Sauerstoff und/oder Ozon angereicherter Luft durchströmt ist.

6. Verfahren nach einem der vorhergehenden Ansprüche, **dadurch gekennzeichnet, dass** der Filter (3) zur Oxidation der organischen Partikel zumindest zeitweise von mit eingesprühten und/oder zugemischten Flüssigkeiten und/oder Gasen angereicherter Luft durchströmt ist.

7. Verfahren nach einem der vorhergehenden Ansprüche, **dadurch gekennzeichnet, dass** der Filter zur Oxidation der organischen Partikel zumindest zeitweise einer energiereichen Strahlung ausgesetzt ist.

8. Verfahren nach einem der vorhergehenden Ansprüche, **dadurch gekennzeichnet, dass** die Oxidation der organischen Partikel durch katalytisch wirkende Materialien katalysiert wird, mit denen das Fasermaterial (3') des Partikel- oder Hybridfilters (2, 3) zumindest teilweise beschichtet ist.

9. Luftzuführeinrichtung für einen Innenraum eines Kraftfahrzeugs, mit einem Partikel- oder Hybridfilter, mit Mitteln zum Heizen des Filters auf eine Temperatur über 100°C und mit Mitteln zur Bereitstellung einer oxidierenden Atmosphäre für den Filter.

10. Luftzuführeinrichtung nach Anspruch 9, **dadurch gekennzeichnet, dass** die Mittel zur Bereitstellung einer oxidierenden Atmosphäre eine Vorrichtung zur Anreicherung der Luft während des Reinigungsvorganges mit atomarem Sauerstoff und/oder Ozon umfassen.

11. Luftzuführeinrichtung nach einem der vorhergehenden Ansprüche, **dadurch gekennzeichnet, dass** die Mittel zur Bereitstellung einer oxidierenden Atmosphäre eine Vorrichtung zum Einsprühen und/oder Zumischen von Flüssigkeiten und/oder Gasen umfassen.

12. Luftzuführeinrichtung nach einem der vorhergehenden Ansprüche, **dadurch gekennzeichnet, dass** dem Partikel- oder Hybridfilter (3) ein weiterer Partikel- oder Hybridfilter (2) vorgeschaltet ist.

13. Luftzuführeinrichtung nach Anspruch 12, **dadurch gekennzeichnet, dass** der weitere Partikel- oder Hybridfilter (2) heizbar ist.

14. Luftzuführeinrichtung nach einem der vorhergehenden Ansprüche, **dadurch gekennzeichnet, dass** der Partikel- oder Hybridfilter (2, 3) ein Fasermaterial (3') umfasst, das aus Kunststoff-, Metall-, Cellulose-, Glas-, Keramik-, nicht-aktivierten oder aktivierten Kohlefasern, sonstigen Fasern aus nachwachsenden Rohstoffen oder aus einem Verbund dieser Materialien besteht.

15. Luftzuführeinrichtung nach einem der vorhergehenden Ansprüche, **dadurch gekennzeichnet, dass** ein Fasermaterial (3') des Partikel- oder Hybridfilters (2, 3) zumindest teilweise mit katalytisch wirkenden Materialien beschichtet ist.

16. Luftzuführeinrichtung nach einem der vorhergehenden Ansprüche, **dadurch gekennzeichnet, dass** der Partikel- oder Hybridfilter (2, 3) eine Heizvorrichtung aufweist.

17. Luftzuführeinrichtung nach Anspruch 16, **dadurch gekennzeichnet, dass** die Heizvorrichtung durch ein Fasermaterial des Partikel- oder Hybridfilters (3') gebildet wird.

18. Luftzuführeinrichtung nach Anspruch 16, **dadurch gekennzeichnet, dass** die Heizvorrichtung eine Mikrowellen-Heizvorrichtung ist.

19. Kraftfahrzeug mit einem Fahrzeuginnenraum, dem Luft zuführbar ist, mit einem Partikel- oder Hybridfilter zur Behandlung der dem Fahrzeuginnenraum zuführbaren Luft, mit Mitteln zum Heizen des Filters auf eine Temperatur über 100°C und mit Mitteln zur Bereitstellung einer oxidierenden Atmosphäre für den Filter.

## Claims

1. A process for cleaning a particle or hybrid filter of an air supply device for a passenger compartment of a motor vehicle which comprises a fibre material,
**characterised in that**
organic particles, in particular soot particles, adhering to the fibre material are oxidised at a temperature above 100°C and below an ignition temperature of the organic particles, the filter (3) for oxidising the organic particles being exposed at least intermittently to an oxidising atmosphere.

2. A process in accordance with claim 1,
**characterised in that**
the particle or hybrid filter (3) for oxidising the organic particles is heated by means of a heating device.

3. A process in accordance with one of the preceding claims,
**characterised in that**
a further particle or hybrid filter (2) connected upstream of the particle or hybrid filter (3) for oxidising the organic particles is heated.

4. A process in accordance with one of the preceding claims,
**characterised in that**
the particle of hybrid filter (2, 3) for oxidising the organic particles is heated by means of microwaves.

5. A process in accordance with one of the preceding claims,
**characterised in that**
air enriched with atomic oxygen and/or ozone flows at least intermittently through the filter (3) for oxidising the organic particles.

6. A process in accordance with one of the preceding claims,
**characterised in that**
air enriched with sprayed in and/or admixed liquids and/or gases flows at least intermittently through the filter (3) for oxidising the organic particles.

7. A process in accordance with one of the preceding claims,
**characterised in that**
the filter for oxidising the organic particles is exposed at least intermittently to energy-rich radiation.

8. A process in accordance with one of the preceding claims,
**characterised in that**
the oxidation of the organic particles is catalysed by catalytically acting materials with which the fibre material (3') of the particle or hybrid filter (2, 3) is at least partially coated.

9. An air supply device for a passenger compartment of a motor vehicle, having a particle or hybrid filter, having means for heating the filter to a temperature above 100°C and having means for providing an oxidising atmosphere for the filter.

10. An air supply device in accordance with claim 9,
**characterised in that**
the means for providing an oxidising atmosphere comprise a device for enriching the air during the cleaning process with atomic oxygen and/or ozone.

11. An air supply device in accordance with one of the preceding claims,
**characterised in that**
the means for providing an oxidising atmosphere comprise a device for spraying in and/or admixing liquids and/or gasses.

12. An air supply device in accordance with one of the preceding claims,
**characterised in that**
a further particle or hybrid filter (2) is connected upstream of the particle of hybrid filter (3).

13. An air supply device in accordance with claim 12,
**characterised in that**
the further particle or hybrid filter (2) can be heated.

14. An air supply device in accordance with one of the preceding claims,
**characterised in that**
the particle or hybrid filter (2, 3) comprises a fibre material (3') which consists of plastic, metal, cellulose, glass or ceramic fibres, of non-activated or activated carbon fibres, of other fibres of reproductive raw materials or of a composite of these materials.

15. An air supply device in accordance with one of the preceding claims,
**characterised in that**
a fibre material (3') of the particle or hybrid filter (2, 3) is at least partially coated with catalytically acting materials.

16. An air supply device in accordance with one of the preceding claims,
**characterised in that**
the particle or hybrid filter (2, 3) has a heating device.

17. An air supply device in accordance with claim 16,
**characterised in that**
the heating device takes the form of a fibre material of the particle or hybrid filter (3').

18. An air supply device in accordance with claim 16,
**characterised in that**
the heating device is a microwave heating device.

19. A motor vehicle with a passenger compartment to which air can be supplied, having a particle or hybrid filter for treating the air which can be supplied to the passenger compartment of the vehicle, having means for heating the filter to a temperature above 100°C and having means for providing an oxidising atmosphere for the filter.

## Revendications

1. Procédé pour nettoyer un filtre à particules ou un filtre hybride comprenant un matériau fibreux, d'un dispositif d'arrivée d'air pour un habitacle d'un véhicule, **caractérise en ce que** des particules organiques adhérant sur le matériau fibreux, en particulier des particules de suie, sont oxydées à une température supérieure à 100°C et au-dessous de la température d'inflammation des particules organiques, le filtre (3) étant exposé au moins temporairement à une atmosphère oxydante pour l'oxydation des particules organiques.

2. Procédé selon la revendication 1, **caractérisé en ce que** le filtre à particules ou le filtre hybride (3) est chauffé au moyen d'un dispositif de chauffage pour l'oxydation des particules organiques.

3. Procédé selon l'une quelconque des revendications précédentes, **caractérisé en ce qu'**un autre filtre à particules ou filtre hybride (2) monté en amont du filtre à particules ou du filtre hybride (3) est chauffé pour l'oxydation de particules organiques.

4. Procédé selon l'une quelconque des revendications précédentes, **caractérisé en ce que** le filtre à particules ou le filtre hybride (2, 3) est chauffé au moyen de micro-ondes pour l'oxydation des particules organiques.

5. Procédé selon l'une quelconque des revendications précédentes, **caractérisé en ce que** le filtre (3) est traversé au moins temporairement par de l'air enrichi avec de l'oxygène atomique et/ou de l'ozone pour l'oxydation des particules organiques.

6. Procédé selon l'une quelconque des revendications précédentes, **caractérisé en ce que** le filtre (3) est traversé au moins temporairement par de l'air enrichi avec des liquides et/ou des gaz injectés et/ou ajoutés pour l'oxydation des particules organiques.

7. Procédé selon l'une quelconque des revendications précédentes, **caractérisé en ce que** le filtre est exposé au moins temporairement à un rayonnement riche en énergie pour l'oxydation des particules organiques.

8. Procédé selon l'une quelconque des revendications précédentes, **caractérisé en ce que** l'oxydation des particules organiques est catalysée par des matériaux à effet catalytique avec lesquels le matériau fibreux (3') du filtre à particules ou du filtre hybride (2, 3) est recouvert au moins partiellement.

9. Dispositif d'arrivée d'air pour un habitacle d'un véhicule, comprenant un filtre à particules ou un filtre hybride, des moyens pour le chauffage du filtre à une température supérieure à 100°C et des moyens pour fournir une atmosphère oxydante destinée au filtre.

10. Dispositif d'arrivée d'air selon la revendication 9, **caractérisé en ce que** les moyens destinés à fournir une atmosphère oxydante comprennent un dispositif pour l'enrichissement de l'air pendant l'opération de nettoyage avec de l'oxygène atomique et/ou de l'ozone.

11. Dispositif d'arrivée d'air selon l'une quelconque des revendications précédentes, **caractérisé en ce que** les moyens destinés à fournir une atmosphère oxydante comportent un dispositif pour l'injection et/ou l'ajout de liquides et/ou de gaz.

12. Dispositif d'arrivée d'air selon l'une quelconque des revendications précédentes, **caractérisé en ce qu'**un autre filtre à particules ou filtre hybride (2) est monté en amont du filtre à particules ou du filtre hybride (3).

13. Dispositif d'arrivée d'air selon la revendication 12, **caractérisé en ce que** l'autre filtre à particules ou filtre hybride (2) peut être chauffe.

14. Dispositif d'arrivée d'air selon l'une quelconque des revendications précédentes, **caractérisé en ce que** le filtre à particules ou filtre hybride (2, 3) comporte un matériau fibreux (3') qui est à base de fibres de plastique, de métal, de cellulose, de verre, de céramique, non activées ou activées, de diverses fibres à base de matériaux qui se renouvellent ou à base d'un ensemble de ces matériaux.

15. Dispositif d'arrivée d'air selon l'une quelconque des revendications précédentes, **caractérisé en ce qu'**un matériau fibreux (3') du filtre à particules ou du filtre hybride (2, 3) est recouvert au moins partiellement avec des matériaux à effet catalytique.

16. Dispositif d'arrivée d'air selon l'une quelconque des revendications précédentes, **caractérisé en ce que** le filtre à particules ou le filtre hybride (2, 3) présente un dispositif de chauffage.

17. Dispositif d'arrivée d'air selon la revendication 16, **caractérisé en ce que** le dispositif de chauffage est formé par un matériau fibreux du filtre à particules ou du matériau hybride (3').

18. Dispositif d'arrivée d'air selon la revendication 16, **caractérisé en ce que** le dispositif de chauffage est un dispositif de chauffage à micro-ondes.

19. Véhicule comprenant un habitacle de véhicule dans lequel de l'air peut être introduit, avec un filtre à particules ou un filtre hybride pour le traitement de l'air pouvant être introduit dans l'habitacle, des moyens pour le chauffage du filtre à une température supérieure à 100°C et des moyens pour fournir une atmosphère oxydante pour le filtre.
